# EUROPÄISCHE PATENTSCHRIFT

(11) **EP 0 456 085 B1**
(45) Veröffentlichungstag und Bekanntmachung des Hinweises auf die Patenterteilung: **17.08.1994**
(21) Anmeldenummer: 91106979.7
(22) Anmeldetag: 30.04.1991
(51) Int. Cl.: F27D 11/08, H05B 7/06

(54) **Gleichstrom-Lichtbogenofen**
Direct current arc furnace
Four à arc à courant continu

(30) Priorität: 09.05.1990 CH 1578/90
(43) Veröffentlichungstag der Anmeldung: 13.11.1991
(73) Patentinhaber: ASEA BROWN BOVERI AG, 5400 Baden (CH)
(72) Erfinder: Stenkvist, Sven-Einar, CH-5200 Brugg (CH)

(56) Entgegenhaltungen:
- EP-A- 0 133 925
- DE-B- 1 053 690
- FR-A- 1 422 830
- US-A- 2 727 936
- US-A- 3 949 151
- US-A- 4 495 625

## Beschreibung

### TECHNISCHES GEBIET

Die Erfindung bezieht sich auf einen Gleichstrom-Lichtbogenofen mit mindestens einer Bodenelektrode und Mitteln zur Erzeugung einer Badbewegung mittels eines im wesentlichen gleichstromdurchflossenen Elektromagneten.

Die Erfindung nimmt dabei Bezug auf einen Stand der Technik, wie er sich beispielsweise aus der US-PS 4,032,704 oder aus FR-A-1422830 ergibt.

### TECHNOLOGISCHER HINTERGRUND UND STAND DER TECHNIK

Bei Gleichstrom-Lichtbogenöfen ist die Bodenelektrode das am höchsten beanspruchte Bauteil. Sie besteht im einfachsten Fall aus einem Stahlkörper, der sich durch den Gefässboden und seine Ausmauerung erstreckt und im Ofeninneren den elektrischen Kontakt zur Schmelze herstellt. Ausserhalb des Gefässbodens ist die Bodenelektrode an die Stromversorgung des Ofens angeschlossen.

Beim Betrieb des Ofens schmilzt die Bodenelektrode bis zu einer bestimmten Tiefe auf. Diese Schmelze vermischt sich mit derjenigen des Ofens. Die Tiefe, bis zu welcher die Bodenelektrode abschmilzt, hängt von verschiedenen Faktoren ab:
- von der Grösse der Stromwärme, welche beim Durchfluss durch die Bodenelektrode entsteht;
- vom Wärmefluss aus der Schmelze in die Bodenelektrode;
- vom Grad der Kühlung der Bodenelektroden.

Um einen sicheren Betrieb des Ofens zu gewährleisten, muss das Zurückschmelzen des Bodenkontakts begrenzt werden. Das Aufheizen durch Stromwärme lässt sich durch die Dimensionierung der Bodenelektrode auf eine geeignete Stromdichte beherrschen. Der Wärmefluss aus der Schmelze in die Bodenelektrode ist hingegen von komplexer Natur, wobei sich zwei Mechanismen überlagern:

Der durch die Schmelze und den aufgeschmolzenen Teil des Bodenkontakts fliessende Ofenstrom führt zu einer Badbewegung (electromagnetic stirring), welche den Wärmeaustausch fördert. Dieser Badbewegung ist ein Prozess überlagert, der in der einschlägigen Literatur als "chemical boiling" bezeichnet wird, und der seine Ursache im Freisetzen von Kohlenmonoxid aus dem aufgeschmolzenen Teil des Bodenkontakts hat. Dieses "Kochen", das insbesondere in Schmelzen auftritt, in welche zur Herabsetzung des Kohlenstoffgehalts Sauerstoff eingeblasen wird, führt zu einem intensiven Wärmeaustausch mit der Bodenelektrode und kann das Zurückschmelzen der Bodenelektrode unter den zulässigen Wert bewirken.

Durch geeigneten Querschnitt der Bodenelektrode und Kühlmassnahmen lässt sich die auf elektromagnetischen Wechselwirkungen beruhende Badbewegung steuern und so das Zurückschmelzen begrenzen. Die bislang einzige Massnahme, die schädlichen Wirkungen des "chemical boiling" zu begrenzen bestehen darin, die Bodenelektrode in eine Vielzahl dünner Metallstäbe aufzuteilen, die alle in Feuerfestmaterial des Gefässbodens eingebettet sind (vgl. EP-A-0058 817). Die beim Zurückschmelzen der Metallstäbe zurückbleibenden Brücken aus Feuerfestmaterial behindern die Badbewegung im Bereich der Bodenelektrode und verhindern damit ein übermässiges Zurückschmelzen der Metallstäbe. Bodenelektroden dieser Art sind jedoch insbesondere für grosse Lichtbogenöfen sehr unwirtschaftlich.

### KURZE DARSTELLUNG DER ERFINDUNG

Ausgehend vom Stand der Technik liegt der Erfindung die Aufgabe zugrunde, einen Gleichstrom-Lichtbogenofen zu schaffen, dessen Bodenelektrode einen einfachen und wirtschaftlichen Aufbau aufweist und bei dem sich das Zurückschmelzen der Bodenelektrode in einfacher Weise kontrollieren lässt.

Diese Aufgabe wird erfindungsgemäss dadurch gelöst, dass der Elektromagnet unmittelbar an der Unterseite des Ofengefässes angeordnet ist und die Bodenelektrode(n) umschliesst, derart, dass diese den Eisenkern des Elektromagneten bilden.

Auf diese Weise erzeugt dieser Magnet ein stationäres Magnetfeld in Richtung der Längsachse der Bodenelektrode. Dieses Feld dämpft alle Badbewegungen in der Schmelze oberhalb des festen Teils der Bodenelektrode. Dabei wirkt der feste Abschnitt der Bodenelektrode als Eisenkern und verstärkt dort die Feldstärke des Magnetfeldes, wo es benötigt wird. Feldstärken im Bereich von 0,05 bis 0,2 Tesla haben sich als ausreichend erwiesen, die Badbewegung oberhalb des festen Teils der Bodenelektrode zu dämpfen.

Diese Elektromagneten lassen sich ohne grossen Aufwand sowohl bei Neukonstruktionen als auch bei bestehenden Oefen vorsehen. Ihr zusätzlicher Leistungsbedarf ist gegenüber dem Leistungsbedarf des gesamten Ofens klein und liegt bei etwa 0,3% der gesamten Ofenleistung.

Bei Gleichstrom-Lichtbogenofenanlagen werden normalerweise in den Speiseinrichtungen Gleichstromdrosseln eingesetzt, damit die gesamte Ofenregelung funktioniert. So werden z.B.in einem 12-Puls-Gleichrichter zwei Drosseln verlangt mit je fünf Windungen, die typisch von etwa 40 kA durchflossen werden. Vorteilhaft können nun die Spulenanordnungen an der Unterseite des Ofengefässes als ebendiese Drosseln verwendet werden, was beispielsweise durch Unterteilung der einen Spule in zwei magnetisch parallelgeschaltete Spulen erfolgen kann.

Die Spulenanordnung hat darüber hinaus noch einen weiteren positiven Effekt auf den Gleichstrom-Lichtbogenofen. Das magnetische Feld durchdringt nicht nur den zurückgeschmolzenen Teil der Bodenelektrode, sondern dringt bis in die mittlere und obere Zone der Schmelze ein. Dort tritt es in Wechselwirkung mit dem Lichtbogenstrom in der Schmelze und führt zu einer Badbewegung rund um die Schmelzelektrode. Diese wiederum trägt zu einer guten Vermischung der Schmelze im oberflächennahen Bereich und damit zum Temperaturausgleich bei.

In der US-A-4,032,704 ist bereits vorgeschlagen worden, einen mit Gleichstrom gespeisten Elektromagneten an der Unterseite des Ofengefässes eines Gleichstromlichtbogens vorzusehen. Dieser Elektromagnet dient jedoch ausdrücklich dazu, in der Schmelze eine zusätzliche Rührbewegung zu erzeugen, um metallurgische Reaktionen eines in die Schmelze eingeblasenen Fluids mit der Schmelze zu beschleunigen.

Die Erfindung wird nachstehend anhand eines in der Zeichnung dargestellten Ausführungsbeispiels näher erläutert.

### KURZE BESCHREIBUNG DER ZEICHNUNGEN

In der Zeichnung zeigt
- Fig.1: in schematisierter Form die durch elektromagnetische Kräfte hervorgerufenen Badbewegungen im Bereich oberhalb der Bodenelektrode;
- Fig.2: ein Ausführungsbeispiel eines Gleichstrom-Lichtbogenofens mit einem Elektromagneten am Gefässboden;
- Fig.3: eine vereinfachte Draufsicht auf den Ofengefässboden mit einer aus sieben Einzelelektroden bestehenden Bodenelektrode im zentralen Bereich des Ofenbodens, denen ein gemeinsamer Elektromagnet zugeordnet ist.
- Fig.4: eine Abwandlung von Fig.3 mit Einzelelektroden, die in Formkörper aus Feuerfestmaterial eingelegt sind;
- Fig.5: eine Schaltungsanordnung mit einem 12-pulsigen Gleichrichter, bei welcher die Elektromagneten in die Ofenspeisung integriert sind.

### DETAILLIERTE BESCHREIBUNG DER ERFINDUNG

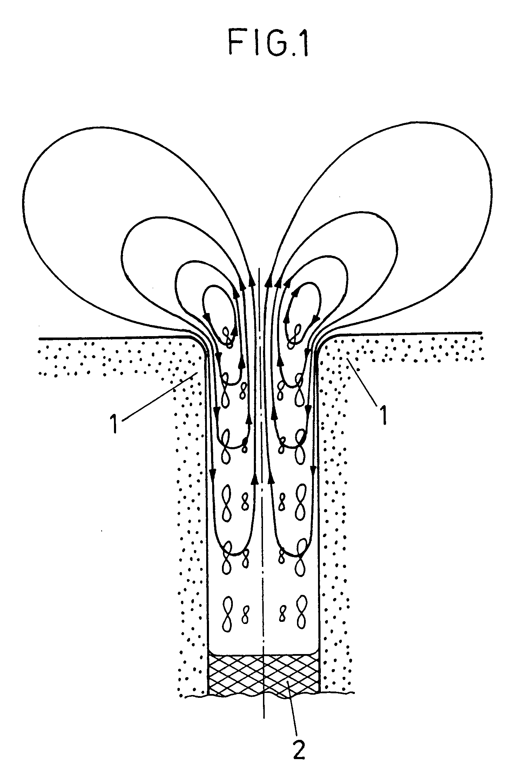

In Fig.1 ist der Bereich des mit Feuerfestmaterial 1 ausgekleideten Gefässbodens eines Gleichstrom-Lichtbogenofens mit einer Bodenelektrode 2 dargestellt. Die ursprünglich den gesamten Gefässboden durchsetzende Bodenelektrode 1 ist zum Teil zurückgeschmolzen. Der Raum oberhalb ist mit einem Gemisch aus geschmolzenem Elektrodenmaterial und Ofenschmelze erfüllt. Die sich unter Einfluss des Ofenstroms einstellende Badbewegung ist durch Pfeile veranschaulicht. Man erkennt, dass sich die Badbewegung mit zunehmender Tiefe abschwächt. Es stellt sich - abhängig von der Stromdichte in der Bodenelektrode und Kühlung von aussen (unten) - ein Gleichgewichtszustand ein.

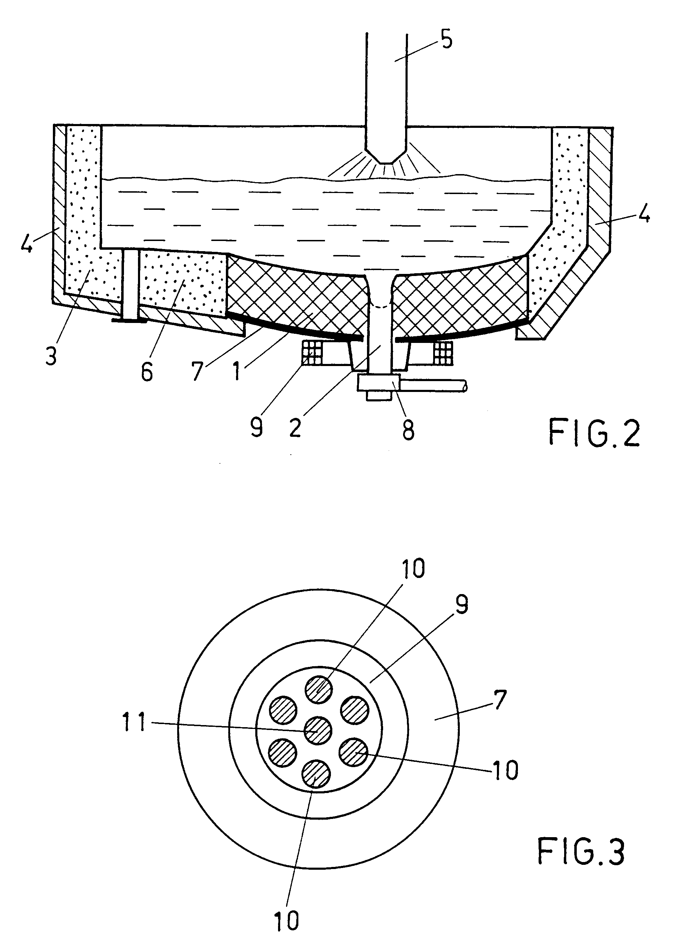

In Fig.2 ist dargestellt, auf welche Weise die Erfindung an einem Gleichstrom-Lichtbogenofen realisiert ist. Sie zeigt den Unterofen eines Gleichstrom-Lichtbogenofens mit einem Ofengefäss 3, das mit dem üblichen Mantel 4 aus metallischen Material versehen ist. Im Ausführungsbeispiel weist der Ofen nur eine als Kathode geschaltete Elektrode 5 auf, doch kann diese Zahl auch 2, drei oder mehr betragen.
Im Ofengrund ist die Bodenelektrode 2 angebracht. Sie besteht im Beispielsfall aus Stahl mit einer ähnlichen Zusammensetzung wie die Schmelze. Der Bodenabstich ist mit 6 bezeichnet. Nach aussen hin schliesst sich die konventionelle Ofenausmauerung 1 an. Sie besteht in der Regel aus Ziegeln, die in einer oder in mehreren Lagen auf einer kalottenartig geformten Bodenplatte 7 aufliegen. Die Bodenelektrode 2 ist am unteren Ende mit einem Stromanschluss 8 versehen, der gleichzeitig zur Kühlung der Bodenelektrode 2 herangezogen werden kann.

Insoweit entspricht der Gleichstrom-Lichtbogenofen dem Stand der Technik und ist beispielsweise im US-Patent 4,228,314 oder auch in der DE-Patentschrift 30 22 566 ausführlich beschrieben.

Erfindungsgemäss ist nun an der Unterseite des Ofenbodens 7 ein Elektromagnet 9 vorgesehen, welche die Bodenelektrode 2 umgibt. Dabei hat sich eine Feldstärke im Bereich von 0,05 bis 0,2 Tesla als ausreichend erwiesen, um die Badbewegungen oberhalb der Bodenelektrode ausreichend zu dämpfen. Bei einem typischen 80 Tonnen-Gleichstrom-Lichtbogenofen mit ca 5,5 m Ofendurchmesser beträgt der Durchmesser des Elektromagneten ca 2m. Bei einer Stromdichte von beispielsweise 5A/mm² beträgt das das Gewicht des Elektromagneten etwa 4000 kg und die elektrischen Verluste liegen etwa bei 200 kW, ein akzeptabler Wert, wenn man bedenkt, dass der Leistungsbedarf eines derartigen Gleichstrom-Lichtbogenofen bei rund 65 MVA liegt; damit erhöht sich der Leistungsbedarf der gesamten Anlage nur um etwa 0,3 %.

Anstelle einer einzigen Bodenelektrode 2 kann eine Vielzahl von Einzelelektroden eingesetzt werden, wie dies in der Fig.3 schematisch verdeutlicht ist. Diese liegen im zentralen Bereich der Bodenplatte 7. Im Beispielsfall sind hier sechs Einzelelektroden 10 um eine zentrale Elektrode 11 gruppiert, wobei alle Elektroden innerhalb des Elektromagneten 9 liegen.

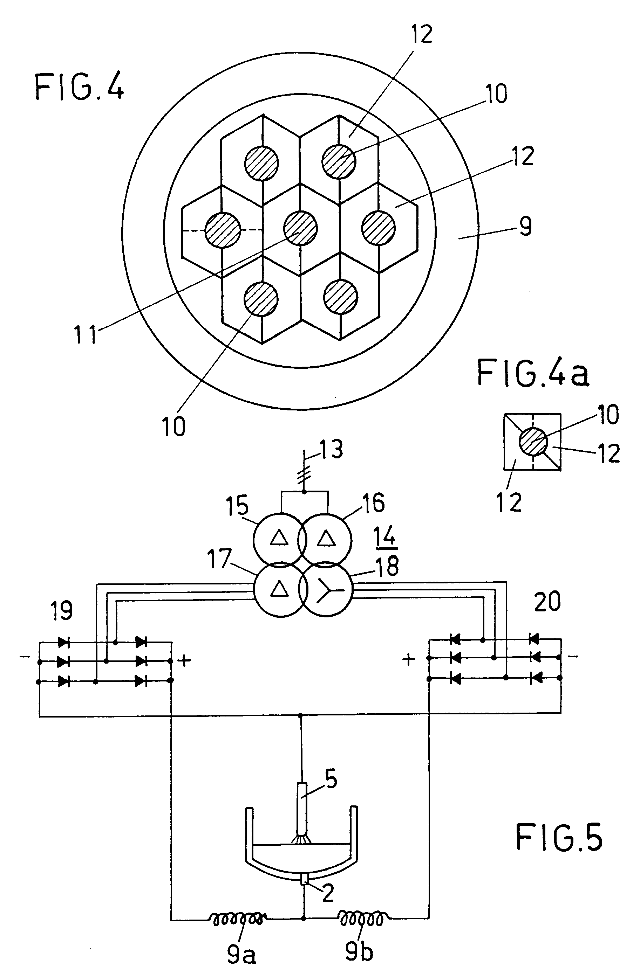

Der Aufbau des Bodenbereichs des Ofengefässes lässt sich bei einer Mehrfachelektroden-Anordnung dadurch vereinfachen, dass die Einzelelektroden gemäss Fig.4 aufgebaut sind. Die 7 Einzelelektroden 10, 11 sind im Gegensatz zur Ausführung nach Fig.3 nicht unmittelbar in das Feuerfestmaterial 1 des Ofenbodens eingebettet, sondern sind von sechseckigen Formkörpern 12 mit Querschnitt eines regelmässigen Sechsecks aus einem feuerfestem Material, z.B. Magnesit, Magnesitgraphit oder einem anderem geeignetem Material, umgeben. Aus Gründen einfacher Herstellung sind die Formkörper 12 zweiteilig ausgebildet, wobei die Trennflächen symmetrisch verlaufen (entweder diagonal (durchgehend gezeichnet) oder entsprechend der strichlierten Linie in Fig.4). Diese Geometrie erlaubt es, diese Gebilde dicht zu packen. Anstelle der Sechseckform kann selbstverständlich auch eine andere Geometrie, z.B. mit quadratischem Querschnitt (vgl. Fig.4a) verwendet werden. Auch kann die Bodenelektrode aus mehr als sieben Einzelelektroden, z.B. 13, aufgebaut sein. Selbstverständlich kann auch eine einzige Bodenelektrode mit der Geometrie gemäss Fig.4 in einen Gleichstrom-Lichtbogenofen gemäss Fig.2 eingebaut werden.

In der Stromversorgungseinrichtung von Gleichstrom-Lichtbogenofen-Anlage werden stets Drosseln zur Glättung des gleichgerichteten Drehstrom eingesetzt. Die Erfindung bietet nun hier eine äusserst wirtschaftliche Möglichkeit, diese ohnehin notwendigen Drosseln zur Dämpfung der Badbewegung zu verwenden.

Die Schaltungsanordnung nach Fig.5 zeigt dies für eine 12-pulsige Gleichrichteranordnung. An ein dreiphasiges Drehstromnetz 13 ist ein Transformator 14 mit zwei Primärwicklungen 15 ,16, die im Dreieck geschaltet sind, und zwei Sekundärwicklungen 17, 18, von denen die eine im Dreieck, die andere in Stern geschaltet ist, angeschlossen. Beide Sekundärwicklungen führen an eine dreiphasige Gleichrichter-Brückenschaltung 19 bzw. 20. Die Minus-Sammelschienen sind miteinander verbunden und an die Schnelzelektrode 5 geführt. Zwischen jeder Plus-Sammelschiene der Brückenschaltungen 19 und 20 und der Bodenelektrode 2 liegt eine Drossel 9a bzw. 9b. Erfindungsgemäss bilden nun diese beiden Drosseln den hier aus zwei Spulen bestehenden Elektromagneten, wobei selbstredend die Anschlüsse und Windungssinn der Spulen so getroffen sind, dass diese Teilmagneten magnetisch parallel geschaltet sind. Bei einer sechs-pulsigen Gleichrichterschaltung entfielen die Wicklungen 15, 17 oder 16, 18 des Transformators 14 und dementsprechend eine der Brücken 19 bzw. 20 und auch eine der Drosseln 9a bzw. 9b.

## Patentansprüche

1. Gleichstrom-Lichtbogenofen mit mindestens einer Bodenelektrode (2) und Mitteln zur Erzeugung einer Badbewegung mittels eines im wesentlichen gleichstromdurchflossenen Elektromagneten (9), dadurch gekennzeichnet, dass der Elektromagnet (9) unmittelbar an der Unterseite des Ofengefässes am Ofenboden (7) vorgesehen ist und die Bodenelektrode(n) (2) umschliesst, und die Feldlinien des Elektromagneten im wesentlichen in Richtung der Bodenelektrode(n) verlaufen.

2. Gleichstrom-Lichtbogenofen nach Anspruch 1, dadurch gekennzeichnet, dass der Elektromagnet (9) vom Ofenstrom durchflossen ist und dabei gleichzeitig die Drossel (9a,9b) im Gleichstromzweig der Ofenspeisung ist.

3. Gleichstrom-Lichtbogenofen nach Anspruch 2, dadurch gekennzeichnet, dass bei einer Ofenspeisung mit einer zwölfpulsigen Gleichrichteranordnung der Elektromagnet in zwei Teilmagnete (9a,9b) aufgeteilt ist, welche Teilmagnete je zwischen gleichartigen Gleichrichter-Sammelschienen und der Bodenelektrode(n) (2) liegen und derart geschaltet sind, dass beide Magnete magnetisch parallel geschaltet sind.

4. Gleichstrom-Lichtbogenofen nach einem der Ansprüch 1 bis 3, dadurch gekennzeichnet, dass die Bodenelektrode (2) aus einer Vielzahl von Einzelelektroden (10,11) besteht, welche elektrisch parallelgeschaltet sind.

5. Gleichstrom-Lichtbogenofen nach einem der Ansprüche 1 bis 4, dadurch gekennzeichnet, dass die Bodenelektrode(n) aus einem Metallkern (10,11) und einem den Kern umgebenden Formkörper (12) mit regelmässigem Querschnitt bestehen.

6. Gleichstrom-Lichtbogenofen nach Anspruch 5, dadurch gekennzeichnet, dass der Formkörper (12) in Elektrodenlängsrichtung geteilt ist und aus zwei symmetrischen Formkörperhälften besteht.

## Claims

1. Direct-current arc furnace having at least one bottom electrode (2) and means for producing a bath agitation by means of an electromagnet (9) through which essentially direct current is passed, characterised in that the electromagnet (9) is provided directly on the underside of the furnace vessel on the furnace bottom (7) and encloses the bottom electrode(s) (2), and the lines of flux of the electromagnet run essentially in the direction of the bottom electrode(s).

2. Direct-current arc furnace according to Claim 1, characterised in that the electromagnet (9) has the furnace current passing through it and is additionally at the same time the choke (9a, 9b) in the direct-current branch of the furnace supply.

3. Direct-current arc furnace according to Claim 2, characterised in that in a furnace supply with a twelve-pulse rectifier arrangement the electromagnet is divided up into two part-magnets (9a, 9b), which part-magnets are each located between rectifier busbars of the same type and the bottom electrode(s) (2) and are connected in such a way that both magnets are connected magnetically in parallel.

4. Direct-current arc furnace according to one of Claim (sic) 1 to 3, characterised in that the bottom electrode (2) consists of a multiplicity of individual electrodes (10, 11) which are connected electrically in parallel.

5. Direct-current arc furnace according to one of Claims 1 to 4, characterised in that the bottom electrode(s) consist of a metal core (10, 11) and a shaped body (12) with a regular cross-section which surrounds the core.

6. Direct-current arc furnace according to Claim 5, characterised in that the shaped body (12) is divided in the longitudinal direction of the electrodes and consists of two symmetrical shaped body halves.

## Revendications

1. Four à arc électrique à courant continu avec au moins une électrode de sole (2) et des moyens pour produire une agitation dans le bain à l'aide d'un électroaimant (9) essentiellement parcouru par un courant continu, caractérisé en ce que l'électroaimant (9) est monté directement sur la face inférieure de la carcasse du-four contre la sole du four (7) et entoure la ou les électrodes de sole (2), et que les lignes de champ de l'électroaimant s'étendent essentiellement dans la direction de la ou des électrodes de sole.

2. Four à arc électrique à courant continu selon la revendication 1, caractérisé en ce que l'électroaimant (9) est parcouru par le courant du four et est, en l'occurrence, simultanément la bobine de réactance (9a, 9b) dans le branchement de courant continu de l'alimentation du four.

3. Four à arc électrique à courant continu selon la revendication 2, caractérisé en ce qu'en cas d'alimentation du four par un dispositif à redresseur à douze impulsions, l'électroaimant est subdivisé en deux aimants partiels (9a, 9b) qui se trouvent respectivement entre des barres omnibus de redresseur de même nature et la ou les électrodes de sole (2) et sont connectés, de telle sorte que les deux aimants soient montés magnétiquement en parallèle.

4. Four à arc électrique à courant continu selon l'une quelconque des revendications 1 à 3, caractérisé en ce que l'électrode de sole (2) se compose d'une pluralité d'électrodes individuelles (10, 11) qui sont montées électriquement en parallèle.

5. Four à arc électrique à courant continu selon l'une quelconque des revendications 1 à 4, caractérisé en ce que la ou les électrodes de sole se composent d'un noyau métallique (10, 11) et d'un corps moulé (12) de section transversale régulière entourant le noyau.

6. Four à arc électrique à courant continu selon la revendication 5, caractérisé en ce que le corps moulé (12) est divisé dans la direction longitudinale de l'électrode et se compose de deux moitiés symétriques de corps moulé.
